# EUROPÄISCHE PATENTSCHRIFT

(11) **EP 0 708 225 B1**
(45) Veröffentlichungstag und Bekanntmachung des Hinweises auf die Patenterteilung: **03.11.1999**
(21) Anmeldenummer: 95113474.1
(22) Anmeldetag: 28.08.1995
(51) Int. Cl.: E21B 17/07

(54) **Dämpfungselement für ein teleskopierbares Bohrgestänge**
Attenuating element for a telescopically slidable drill string
Elément d'amortissement pour un foret à extension télescopique

(30) Priorität: 21.10.1994 DE 9416982 U
(43) Veröffentlichungstag der Anmeldung: 24.04.1996
(73) Patentinhaber: Bauer Spezialtiefbau GmbH, 86529 Schrobenhausen (DE)
(72) Erfinder: Harthauser, Werner, D-86637 Wertingen (DE)
(74) Vertreter: Lang, Friedrich, Dipl.-Ing.

(56) Entgegenhaltungen:
- EP-A- 0 170 771
- EP-A- 0 436 046
- EP-A- 0 488 875
- DE-A- 4 041 303
- DE-U- 9 104 293
- GB-A- 2 157 341
- US-A- 4 162 619
- US-A- 4 844 181
- US-A- 5 224 898

## Beschreibung

Die Erfindung betrifft ein Dämpfungselement für eine teleskopierbare Bohrstange mit einem Innenrohr, das von mindestens einem Außenrohr umgeben ist, an welchem außenseitige, in Längsrichtung unterbrochene und am bohrwerkzeugseitigen Ende innenseitige Mitnehmerleisten angeordnet sind, deren Anschlagflächen bei Übertragung der Bohrantriebskräfte von einem Drehantrieb auf ein Bohrwerkzeug in Eingriff bringbar sind, wobei das Innenrohr von einem axialen Dämpfungselement zur Dämpfung einer axialen Relativbewegung zwischen dem Außenrohr und dem Innenrohr umgeben ist, gemäß dem Oberbegriff des Anspruchs 1.

Derartige teleskopierbare Bohrgestänge, die als Kelly-Stange bekannt sind, verwendet man üblicherweise beim diskontinuierlichen Bohren mit Kastenbohrern oder ähnlichen Bohrwerkzeugen zur Übertragung von Drehmomenten zwischen einem Drehantrieb und dem Bohrwerkzeug. Zur Übertragung von axialen Druckkräften auf das Bohrwerkzeug verwendet man auch Kelly-Stangen, deren einzelne, ineinander verschiebbare Rohre in Achsrichtung in bestimmten Stellungen verriegelbar sind. Hierzu sind die außenseitigen Mitnehmerleisten zur Bildung von Mitnehmertaschen, in welche die zugehörigen innenseitigen Mitnehmerleisten aufgenommen werden, unterbrochen.

Es hat sich in der Praxis manchmal gezeigt, daß der Einsatz von Kelly-Stangen auf Baustellen gerade in Wohngebieten mit einem relativ hohen Lärmpegel verbunden ist. Dies kann zu einer starken Lärmbelästigung der Anwohner und des Bedienungspersonals führen. Der Betriebslärm, der als Körper- und Luftschall insbesondere auf das Spiel zwischen den einzelnen Teleskopstangen und auf die impulsartigen Bewegungen der Bohrstangen zurückzuführen ist, ensteht beispielsweise beim Entleeren der Bohrwerkzeuge durch schockierende Drehbewegungen und durch das Aufeinanderprallen von Metall auf Metall. Beim Bohren auf harten Böden wird die festssitzende Kelly-Stange verdreht. Nach dem Aufreißen des Bodens werden durch das Zurückschnellen ebenfalls Körperschwingungen als Rattergeräusch wahrnehmbar. Außerdem entsteht beim Ausfahren und Einziehen der Kelly-Stange durch das schnelle Aufsetzen der Wegbegrenzer in axialer Richtung an den Anschlägen der einzelnen Stangen ein Aufprallgeräusch. Durch die große Aufprallenergie, insbesondere wenn sich das Innenrohr nach einer Verkantung im Außenrohr wieder löst und plötzlich nach unten saust, können ferner Schäden am Rohrgestänge verursacht werden. Die sich in den einzelnen Konstruktionsteilen fortsetzenden Körperschallwellen führen an den verschiedenen Stellen der Kelly-Stange zu einer ungedämpften Schallabstrahlung. Der entstehende Luftschall wird in Abhängigkeit vom Geräuschespektrum als lästiger bis schädlicher Lärm wahrgenommen.

Aus der DE 40 41 303 A1 ist es bekannt, zur Lärmbegrenzung die einzelnen Rohre mit Dämpfungselementen auszubilden. So ist z.B. das Außenrohr einer Kelly-Stange doppelwandig ausgebildet und mit einem Dämpfungsmittel ausgeschäumt. Das Innnenrohr ist hohl ausgebildet und ebenfalls mit einem Dämpfungsmittel versehen. Weiter sind zwischen den Mitnehmerleisten Dämpfungselemente vorgesehen, um den beim Drehantrieb anftretenden Lärm zu dämpfen.

Obwohl die in der DE 40 41 303 A1 vorgeschlagenen Maßnahmen zu einer entscheidenden Verminderung der Lärmbelästigung geführt haben, ist der bei derartigen Kelly-Stangen auftretende Lärm, insbesondere der beim Aufsetzen der Wegbegrenzer an den Anschlägen der einzelnen Stangen durch den Aufprall verursachte Lärm, immer noch beachtlich.

In der offengelegten europäischen Patentanmeldung EP-A-0 170 771 wird ein im wesentlichen aus einer Spindel und einer äußeren Röhre bestehendes Bohrwerkzeug beschrieben. Zur Aufnahme von Stoßkräften parallel und senkrecht zur Achsrichtung des Bohrwerkzeugs sind dort ringförmige Dämpfungselemente zwischen Spindel und der die Spindel umgebenden äußeren Röhre vorgesehen. Eine teleskopierbare Bohrstange entsprechend der europäischen Patentanmeldung EP-A-0 170 771 weist eine erheblich größere Wandstärke als teleskopierbare Kelly-Stangen auf. Dadurch werden Gewindeverbindungen der äußeren Röhre ermöglicht, die im Fall der Kelly-Stange aufgrund der Dünnwandigkeit der Bauteile nicht möglich ist. Durch die Gewindeverbindung der äußeren Bohrstangenteile in genannter europäischer Patentanmeldung können die Dämpfungselemente nach dem Ausbau der Bohrstange aus dem Bohrstrang ausgetauscht oder erneuert werden. Da bei der Kelly-Stange die Befestigungen der Dämpfungselemente geschweißt sind, können nur in einem Reparaturauftrag die Dämpfungselemente ersetzt werden.

Der Erfindung liegt die **Aufgabe** zugrunde, ein Dämpfungselement für eine teleskopierbare Bohrstange zu schaffen, mit dem das beim Ausfahren und Einziehen der Kelly-Stange durch das schnelle Aufsetzen der Wegbegrenzer an den Anschlägen der einzelnen Stange verursachte Aufprallgeräusch zu mindern und Schäden am Gestänge vermieden werden. Darüber hinaus soll die Anordnung eine volle Ausnutzung der Länge des Innenrohres ermöglichen und die Montage der Kelly-Stange nicht behindern.

Diese Aufgabe wird durch die in Anspruch 1 gekennzeichnete Erfindung gelöst, d.h. dadurch, daß das Dämpfungselement zwischen einem am oberen Ende des Innenrohres fest angeordneten Zentrierring und einem darunter relativ zum Innenrohr verschiebbar angeordneten, mit einem inneren Anschlag am Außenrohr in Eingriff bringbaren Anschlagring angeordnet ist.

Mit einem derartigen das Innenrohr umgebenden Dämpfungselement wird der Aufprall beim Verschieben der Rohre bzw. dem Aufsetzen der Wegbegrenzer an den Anschlägen und damit der Geräuschpegel entscheidend gemindert. Das Dämpfungselement ist dort am Innenrohr angeordnet, wo ein Aufprall stattfindet. Dadurch kann die gesamte Länge des Innenrohres ausgenutzt werden und der Zusammenbau der Kelly-Stange wird durch das Dämpfungselement nicht behindert.

Vorteilhafte Ausgestaltungen der Erfindung ergeben sich aus den Unteransprüchen.

Das Dämpfungselement wird zweckmäßigerweise aus einem elastischen Werkstoff gebildet. Gemäß einer vorteilhaften Ausgestaltung der Erfindung ist vorgesehen, daß das Dämpfungselement aus mindestens einem elastischen, um das Innenrohr angordneten Ring besteht. Dieser Ring kann aus mehreren übereinander angeordneten Tellerfedern und/oder Kunststoffringen gebildet werden. Mit einer derartigen Anordnung ist es möglich, die gewünschte Dämpfung herbeizuführen und ferner die Dämpfungscharakteristik gezielt einzustellen.

Gemäß einer weiteren vorteilhaften Ausgestaltung der Erfindung ist vorgesehen, daß der Ring einen radialen Überstand aufweist. Hierdurch kann ein möglicher Aufprall des Zentrierrings und/oder des Anschlagrings gegen die Innenfläche des Außenrohres gedämpft werden.

Ein Ausführungsbeispiel der vorliegenden Erfindung ist in der Zeichnung dargestellt und wird im folgenden näher beschrieben. Es zeigt:
- Fig. 1: eine schematische Schnittansicht des Dämpfungselements, und
- Fig. 2: eine Schnittansicht des Dämpfungselements unter Verwendung von Kunststoffringen.

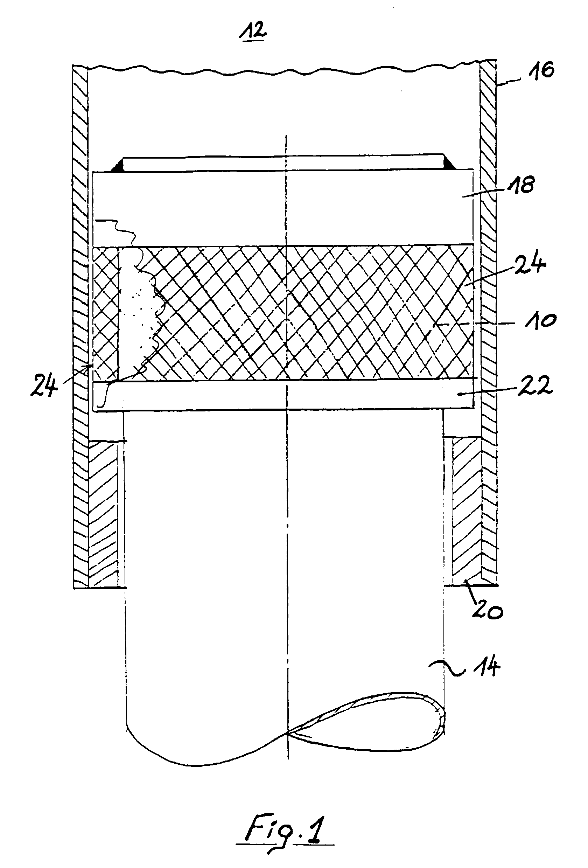

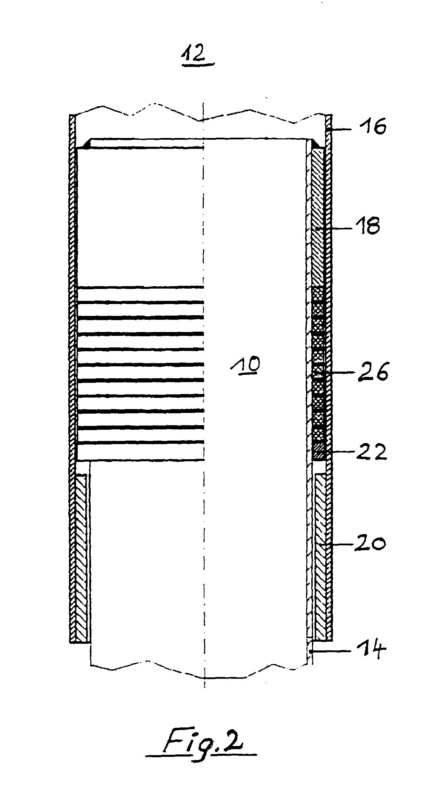

Das in Fig. 1 dargestellte Dämpfungselement 10 für eine teleskopierbare Bohrstange 12 mit einem Innenrohr 14, das von mindestens einem Außenrohr 16 umgeben ist, ist am oberen Ende des Innenrohres 14 angeordnet. Das obere Ende des Innenrohres 14 ist mit einem am Rohr befestigten Zentrierring 18 versehen. Der Zentrierring 18 ist am Außenumfang des Innenrohres 14 angeschweißt. Unterhalb des Zentrierrings 18 ist ein Anschlagring 22 relativ zum Innenrohr bewegbar angeordnet. Der Anschlagring 22 kommt bei betriebsbedingten Axialbewegungen des Innenrohres 14 und des Außenrohres 16 mit am Innenumfang des Außenrohres angeordneten Anschlägen 20 in Eingriff. Zur Dämpfung des Aufpralls ist zwischen dem Anschlagring 22 und dem Zentrierring 18 ein Dämpfungselement 10 angeordnet. Das Dämpfungselement 10 besteht aus einem den Umfang des Innenrohres 14 umgebenden Ring 24. Der Ring 24 besteht aus einem elastischen Material. Er kann beispielsweise einstückig oder aus mehreren übereinander angeordneten Kunststoffringen 26 (siehe Fig. 2) gebildet werden. Es ist ebenfalls möglich, den Ring 24 aus mehreren axial übereinander angeordenten Tellerfedern zu bilden. Ebenfalls ist eine Kombination von alternierend mit federnden Kunststoffringen angeordneten axial verschiebbaren Ringscheiben möglich.

Der Ring 24 kann einen radialen Überstand aufweisen, wodurch weiter ein möglicher Aufprall des Zentrierrings 18 und/ oder des Aufschlagrings 22 gegen die Innenwand des Außenrohres 16 gedämpft wird.

Das in Fig. 2 dargestellte Dämpfungselement 10 besteht aus übereinander angeordneten federnden Kunststoffringen 26. Wie dargestellt sind die Kunststoffringe 26 zwischen dem oberen Zentrierring 18 und dem unteren Anschlagring 22 angeordnet. Bei einer relativen Axialbewegung des Innenrohres 14 und des Außenrohres 16 schlägt der Anschlagring 22 gegen den Anschlag 20, wodurch die Kunststoffringe 26 zusammengedrückt werden und dadurch den Aufprall und das damit verbundene Geräusch dämpfen.
Mit dem erfindungsgemäßen Dämpfungselement wird bei einem betriebsbedingten Aufprall des Anschlagrings 22 auf die Anschläge 20 des Innenrohres dieser Aufprall gedämpft. Dadurch wird eine Kelly-Stange geschaffen, bei welcher die Aufschlagsenergie des Innenrohres 14 auf das Außenrohr 16 vermindert und damit Schäden vermieden werden, und die sich durch besonders geringe Betriebsgeräusche auszeichnet.

## Patentansprüche

1. Dämpfungselement für eine teleskopierbare Bohrstange mit einem Innenrohr, das von mindestens einem Außenrohr umgeben ist, an welchem außenseitige, in Längsrichtung unterbrochene und am bohrwerkzeugseitigen Ende innenseitige Mitnehmerleisten angordnet sind, deren Anschlagflächen bei Übertragung der Bohrantriebskräfte von einem Drehantrieb auf ein Bohrwerkzeug in Eingriff bringbar sind, wobei
das Innenrohr (14) von einem axialen Dämpfungselement (10) zur Dämpfung einer axialen Relativbewegung zwischen dem Außenrohr (16) und dem Innenrohr (14) umgeben ist,
dadurch **gekennzeichnet,**
daß das Dämpfungselement (10) zwischen einem am oberen Ende des Innenrohres (14) fest angeordneten Zentrierring (18) und einem darunter relativ zum Innenrohr (14) verschiebbar angordneten, mit einem inneren Anschlag (20) am Außenrohr (16) in Eingriff bringbaren Anschlagring (22) angeordnet ist.

2. Dämpfungselement nach Anspruch 1,
dadurch **gekennzeichnet ,**
daß das Dämpfungselement (10) aus mindestens einem elastischen, um das Innenrohr angeordneten Ring (24) besteht.

3. Dämpfungselement nach einem der Ansprüche 1 oder 2,
dadurch **gekennzeichnet ,**
daß der Ring (24) aus mehreren übereinander angeordneten Tellerfedern gebildet wird.

4. Dämpfungselement nach einem der Ansprüche 1 oder 2,
dadurch **gekennzeichnet ,**
daß der Ring (24) aus Kunststoffringen (26) gebildet wird, die axial geschichtet sind.

5. Dämpfungselement nach Anspruch 4,
dadurch **gekennzeichnet ,**
daß der Ring aus einem Paket von alternierend angeordneten Ringscheiben und federnden Kunststoffringen gebildet ist.

6. Dämpfungselement nach Anspruch 3 bis 5,
dadurch **gekennzeichnet,**
daß durch Anordnung von verschiedenen Tellerfedern und/oder Kunststoffringen (26) gezielt eine vorgegebene Dämpfungscharakteristik eingestellt ist.

7. Dämpfungselement nach einem der vorhergehenden Ansprüche,
dadurch **gekennzeichnet ,**
daß der Ring (24) einen radialen Überstand aufweist.

## Claims

1. Damping element for a telescopable boring bar with an inner pipe surrounded by at least one outer pipe on which are arranged on the outside, longitudinally interrupted and on the boring tool-side end inside carrier ledges, whose stop faces are engageable with a boring tool by a rotary drive on transmitting the boring drive forces,
the inner pipe (14) being surrounded by an axial damping element (10) for damping an axial relative movement between the outer pipe (16) and the inner pipe (14),
**characterized** in that
the damping element (10) is positioned between a centering ring (18) positioned in fixed manner on the upper end of the inner pipe (14) and a stop ring (22) engageable with an inner stop (20) on the outer pipe (16) and displaceably arranged relative to the inner pipe (14) below the centering ring (18).

2. Damping element according to claim 1,
**characterized** in that
the damping element (10) comprises at least one elastic ring (24) arranged around the inner pipe.

3. Damping element according to one of the claims 1 or 2,
**characterized** in that
the ring (24) is formed from several superimposed spring washers.

4. Damping element according to one of the claims 1 or 2,
**characterized** in that
the ring (24) is formed from axially superimposed plastic rings (26).

5. Damping element according to claim 4,
**characterized** in that
the ring is formed from a set of alternating washers and resilient plastic rings.

6. Damping element according to claim 3 to 5,
**characterized** in that
by providing several spring washers and/or plastic rings (26) a predetermined damping characteristic can be set in planned manner.

7. Damping element according to one of the preceding claims,
**characterized** in that
the ring (24) has a radial projection.

## Revendications

1. Élément d'amortissement pour un foret à extension télescopique avec un tube intérieur, qui est entouré d'au moins un tube extérieur, sur lequel sont placées des barres entraîneuses extérieures interrompues dans le sens longitudinal et intérieures au niveau de l'extrémité côté outil de forage, dont les surfaces de butée peuvent être amenées en prise sur un outil de forage en cas de transmission des forces motrices de forage depuis un entraînement rotatif, le tube intérieur (14) étant entouré d'un élément d'amortissement axial (10) destiné à amortir un mouvement axial relatif entre le tube extérieur (16) et le tube intérieur (14), ***caractérisé en ce que*** l'élément d'amortissement (10) est placé entre une bague de centrage (18) montée fixe à l'extrémité supérieure du tube intérieur (14) et une bague de butée (22) montée mobile au-dessus par rapport au tube intérieur (14) et pouvant être mise en prise avec une butée intérieure (20) sur le tube extérieur (16).

2. Élément d'amortissement selon la Revendication 1, ***caractérisé en ce que*** l'élément d'amortissement (10) se compose d'au moins une bague élastique (24) placée autour du tube intérieur.

3. Élément d'amortissement selon l'une quelconque des Revendications 1 ou 2, ***caractérisé en ce que*** la bague (24) est formée de plusieurs rondelles ressorts superposées.

4. Élément d'amortissement selon l'une quelconque des Revendications 1 ou 2, ***caractérisé en ce que*** la bague (24) est formée de bagues en matière plastique (26) qui sont empilées axialement.

5. Élément d'amortissement selon la Revendication 4, ***caractérisé en ce que*** la bague est formée d'un paquet de rondelles annulaires et de bagues élastiques en matière plastique disposées de manière alternée.

6. Élément d'amortissement selon l'une quelconque des Revendications 3 à 5, ***caractérisé en ce qu'*** une caractéristique d'amortissement définie peut être ajustée en modifiant l'agencement de différentes rondelles ressorts et/ou bagues en matière plastique (26).

7. Élément d'amortissement selon l'une quelconque des Revendications précédentes, ***caractérisé en ce que*** la bague (24) présente un débord radial.
